Europäisches Patentamt

European Patent Office

Office européen des brevets

(19)

(11) Numéro de publication : **0 320 424 B1**

(12) **FASCICULE DE BREVET EUROPEEN**

(45) Date de publication du fascicule du brevet :
16.10.91 Bulletin 91/42

(51) Int. Cl.⁵ : **F16B 35/06**

(21) Numéro de dépôt : **88460031.3**

(22) Date de dépôt : **02.12.88**

(54) **Dispositif de verrouillage notamment pour portes d'enceintes rotatives sous pression.**

(30) Priorité : **08.12.87 FR 8717266**

(43) Date de publication de la demande :
**14.06.89 Bulletin 89/24**

(45) Mention de la délivrance du brevet :
**16.10.91 Bulletin 91/42**

(84) Etats contractants désignés :
**AT BE CH DE ES GB GR IT LI LU NL SE**

(56) Documents cités :
**EP-A- 0 161 652
DE-A- 2 818 862
DE-B- 1 262 705
DE-C- 302 814**

(73) Titulaire : **ARMOR-INOX SA
Route de Dinan Boîte Postale 16
F-56430 Mauron (FR)**

(72) Inventeur : **Dreano, Claude
Route de Perhan
F-56490 Guilliers (FR)**

(74) Mandataire : **Le Guen, Louis François et al
CABINET Louis LE GUEN 38, rue Levavasseur
B.P. 91
F-35802 Dinard Cédex (FR)**

## Description

La présente invention concerne des dispositifs de verrouillage à boulons et écrous, destinés plus particulièrement à être utilisés pour fermer des portes d'enceintes rotatives contenant un gaz sous pression.

Dans certains traitements de la viande, tels que saumurage ou attendrissage, on malaxe la viande dans une enceinte ou baratte, qui tourne autour d'un axe sensiblement horizontal. Pendant la rotation, on met, selon le traitement désiré, l'enceinte sous vide ou sous pression au moyen d'un gaz approprié. A titre d'exemple, une telle baratte est décrite, ainsi que le traitement, dans le brevet français n° 2394250.

Dans la construction d'une baratte fonctionnant continuellement ou périodiquement sous pression, le constructeur sait prévoir les parois de l'enceinte et de la porte de celle-ci suffisamment solides pour résister à la pression qui règne à l'intérieur de l'enceinte. Comme toutes les portes, la porte d'une baratte tourne autour d'une charnière et porte des verrous coopérant avec des moyens de verrouillage montés autour de l'ouverture de l'enceinte. Par construction, les verrous et les moyens de verrouillage sont prévus assez solides pour maintenir la porte rigoureusement fermée, quand l'enceinte est sous pression. Jusqu'ici, on a utilisé des verrous qui se composaient d'un système vis-écrou, la vis passant dans une oreille portée par la porte et une oreille portée par l'enceinte, et l'écrou étant vissé sur la vis pour rapprocher les deux oreilles. Ce système simple à mettre en oeuvre n'offre aucune garantie contre des négligences ou des oublis du personnel qui peut omettre de monter certaines vis et/ou ne pas serrer assez les écrous. Si, par exemple, trois vis étaient serrées au lieu de six, on risquerait un arrachement de la porte ce qui pourrait occasionner un accident. Dans certains pays, de telles barattes ne peuvent pas être homologuées, car elles n'offrent pas toutes les garanties de sécurité spécifiées par la réglementation.

Un objet de la présente invention consiste à prévoir des dispositifs de verrouillage qui évitent les inconvénients mentionnés ci-dessus, ces dispositifs pouvant toutefois trouver d'autres applications que la fermeture de la porte d'une enceinte rotative sous pression.

L'objet mentionné ci-dessus, ainsi que d'autres, sont atteints par la mise en oeuvre du dispositif défini dans la revendication 1 et les revendications dépendantes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 est une vue partielle de face d'une porte d'enceinte, munie de dispositifs de verrouillage suivant l'invention,

la Fig. 2 est une vue en coupe de la porte de la Fig. 1, suivant la ligne II-II de la Fig. 1, la porte fermant l'ouverture d'une enceinte,

la Fig. 3 est une vue en élévation d'un dispositif de verrouillage suivant l'invention,

la Fig. 4 est une autre vue en élévation du dispositif de la Fig. 3, en position déverrouillée, et

la Fig. 5 est une vue de dessous du dispositif de verrouillage de la Fig. 4, en position de verrouillage.

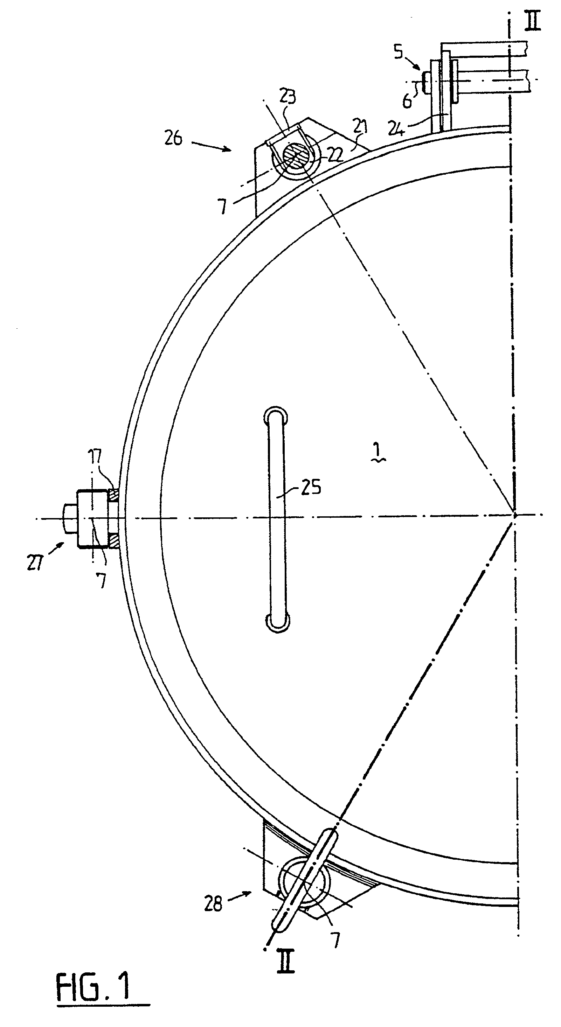

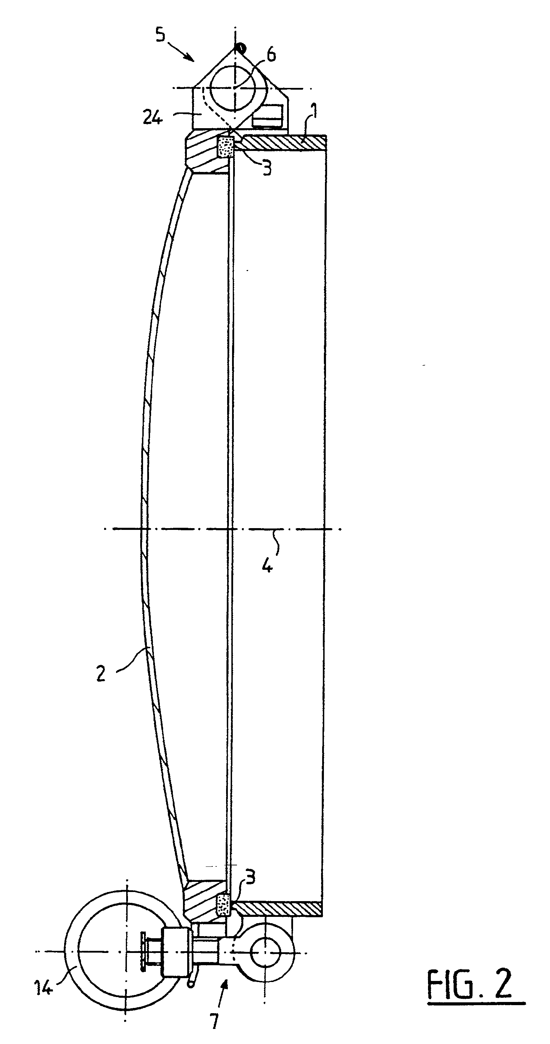

Aux Figs. 1 et 2, on a montré une enceinte 1 dont l'ouverture est fermée par une porte 2 appliquée contre le bord 3 de l'ouverture. L'enceinte 1 a une forme de révolution et, en fonctionnement, tourne autour de son axe de symétrie horizontal 4. La porte 2 peut pivoter autour d'une charnière 5 à axe de rotation 6. A la Fig. 1, l'enceinte 1 est montrée arrêtée, la charnière 5 en position haute et l'axe 6 étant horizontal. En six points angulairement espacés de 60°, des dispositifs de verrouillage 7 sont prévus pour assurer la fermeture de la porte.

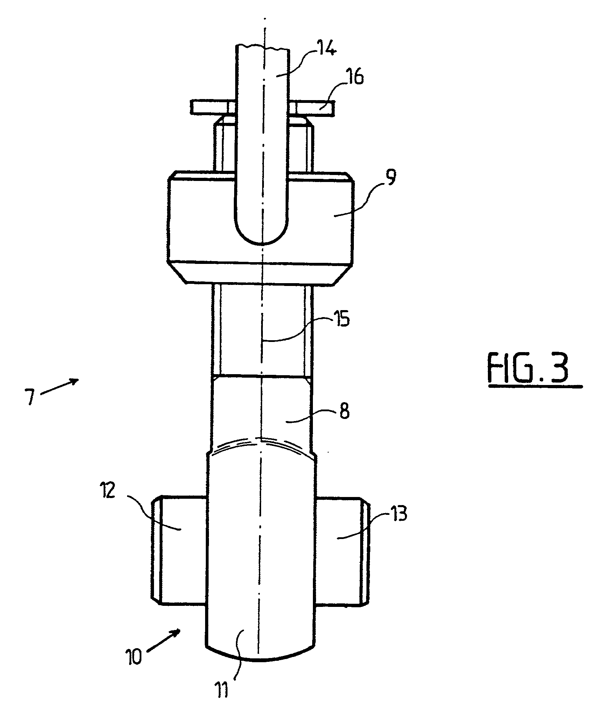

Un dispositif de verrouillage 7 est montré à la Fig. 3. Il comprend un boulon 8 coopérant avec un écrou 9. La tête 10 du boulon 8 est un corps cylindrique 11 dont l'axe est perpendiculaire à celui du boulon et qui est pourvu, de chaque côté, de bossages 12 et 13, également cylindriques et de même axe que le corps 11. En pratique, le boulon 8 est une pièce monobloc en acier formé, puis filetée, ce qui lui assure une très bonne résistance.

L'écrou 9 est solidaire d'un anneau 14, qui sert à le visser ou à le dévisser à la manière d'un écrou à papillon. Le plan de l'anneau 14 contient l'axe 15 du boulon 8. Au bout de la tige filetée du boulo 8 est soudée une rondelle 16 de plus grand diamètre que la tige filetée qui sert de butée en empêchant de dévisser complètement l'écrou 9. L'anneau 14 de manipulation de l'écrou 9 a ses extrémités soudées à celui-ci et a un diamètre relativement important pour assurer un bon couple au vissage ou au dévissage. De plus, l'anneau 14, vu sa forme fermée, permet de manipuler facilement d'une seule main la tête 10 du boulon 8 pour la mettre en place ou l'en écarter.

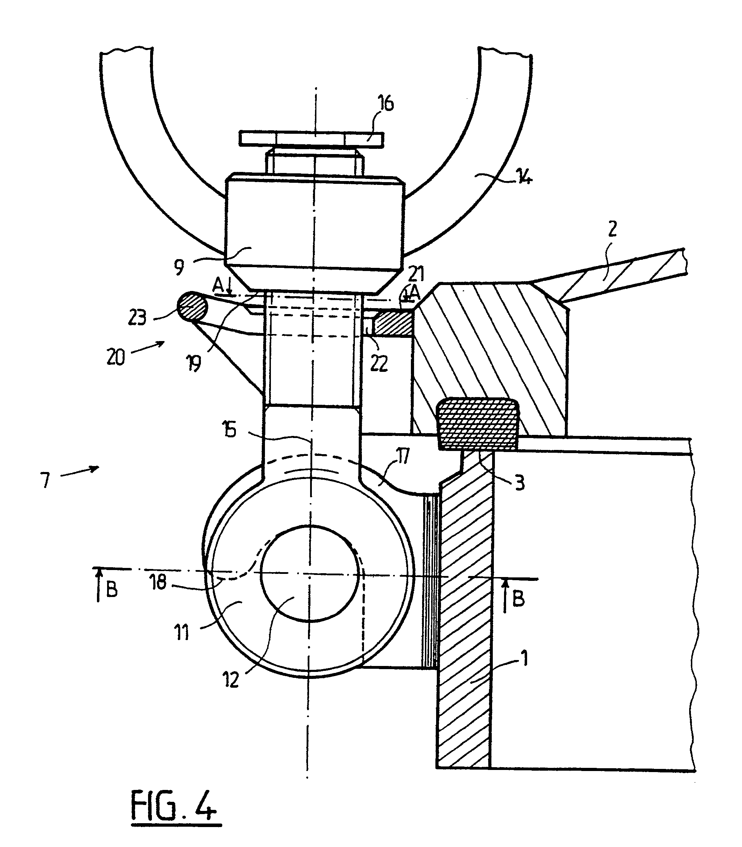

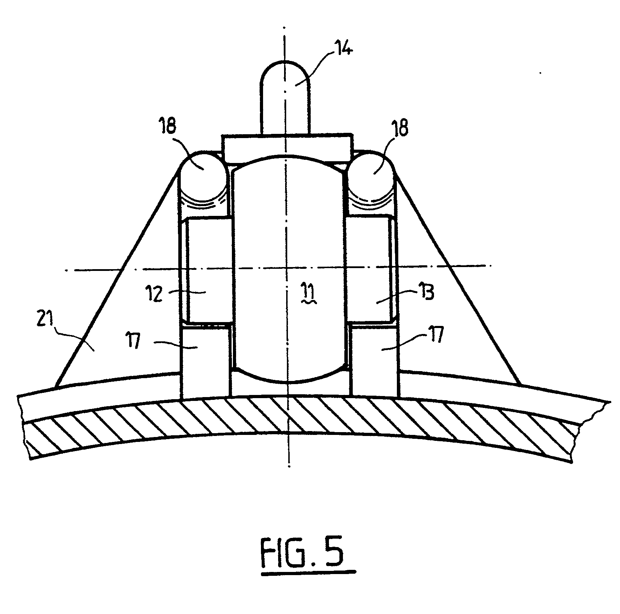

A la Fig. 5, est montrée une paire de crochets 17 qui sont soudés à la surface externe de l'enceinte 1 et dont les extrémités libres 18 sont recourbées en s'écartant de la porte 2. La largeur de l'espace libre entre les crochets 17 est égale, au jeu nécessaire près, à l'épaisseur du corps cylindrique 11 de la tête 10 du boulon 8. Ainsi, quand on tourne l'écrou 9 au moyen de l'anneau 14, la tête 10 du boulon 8 reste immobile. Par ailleurs, le rayon des bossages cylindriques correspond à celui de la partie interne des crochets 17, Fig. 4.

Comme le montre encore la Fig. 4, en position de serrage, la face 19 de l'écrou 9, qui est tournée vers la tête 10 du boulon 8 repose conte le siège d'une oreille 20 solidaire du bord de la porte 2. D'une manière plus détaillée, l'oreille 20 se compose d'une plaque trapézoïdale 21 dont la grande base est soudée au bord de la porte et dans laquelle est prévue une échancrure 22, Fig. 1 s'ouvrant vers la petite base, mais fermée par une barrette 23 pour emprisonner la tige du boulon 8. La largeur de l'échancrure est suffisante pour le passage de la tige du boulon 8, mais trop petite pour laisser passer l'écrou 9. Ainsi, l'ensemble boulon-écrou reste toujours accroché à la porte 2, car la butée 16 empêche de dévisser complètement l'écrou 9.

Quand on désire désassembler la tête 10 du boulon 8 des crochets 17, au moyen de l'anneau 14, on dévisse l'écrou 9 jusqu'à ce qu'il vienne en butée sur la rondelle 16. Les bossages 12 et 13 descendent alors et, en inclinant la tige du boulon 8 dans l'échancrure 22, on peut les faire passer sous les extrémités 18 des crochets 17.

Comme le montre la Fig. 1, dont une seule moitié de la porte 2 est montrée, l'autre étant symétrique, la porte 2 s'accroche sur l'axe 6, servant de charnière 5 et solidaire de l'enceinte 1, au moyen de crochets 24. Des poignées 25 permettent de manipuler la porte et de l'accrocher à l'axe 6 ou de l'en décrocher. A la Fig. 1, on a représenté en 26 le dispositif de verrouillage coupé selon la ligne A-A de la Fig. 4, en supposant l'écrou 9 dévissé. On y a également, en 27, le dispositif de verrouillage coupé suivant la ligne B-B de la Fig. 4, et, en 28, le dispositif de verrouillage vu de dessus, en position verrouillée.

La coupe de la Fig. 2 montre également le joint d'étanchéité 29 reposant contre le bord de l'ouverture de l'enceinte 1.

Il apparaît que les dispositifs de verrouillage ne peuvent être détachés du couvercle 2. Donc le personnel ne peut en oublier aucun. De plus, si un ou plusieurs dispositifs ne sont pas accrochés, ils vont au cours de la rotation de la barratte heurter certaines parties ce qui provoque un bruit tel que l'on doit arrêter la machine et accrocher correctement les dispositifs et les serrer. Enfin, une fois accrochés, les anneaux 14, ayant un diamètre relativement grand, le serrage devient pratiquement instinctif.

En 27, à la Fig. 1, on a fait apparaître que les bossages 12 et 13 peuvent être les extrémités d'une courte tige passant dans un trou prévu dans le corps cylindrique. La tige étant soudée à ce corps.

## Revendications

1. Dispositif de verrouillage pour porte d'enceinte rotative sous pression comprenant un boulon (8), un écrou (9), des crochets (17) et une oreille percée (20), caractérisé en ce que la tête (10) du boulon (8) est accrochable d'une manière amovible, aux crochets (17) portés par l'enceinte (1), l'autre extrémité de la tige du boulon passant dans l'oreille (20) portée par la porte (2), l'écrou (9) étant vissé sur la tige du boulon (8) de l'autre côté de l'oreille (20) par rapport à la tête (10), l'extrémité libre du boulon (8) portant porte une butée (16) dont la plus grande dimension est plus grande que le diamètre de ladite vis.

2. Dispositif de verrouillage suivant la revendication 1, caractérisé en ce que l'écrou (9) est solidaire d'un anneau de préhension (14) dont le plan contient l'axe du boulon (8).

3. Dispositif de verrouillage suivant la revendication 1 ou 2, caractérisé en ce que la tête (10) du boulon (8) comprend un corps cylindrique (11) d'axe perpendiculaire à celui de la tige dudit boulon et portant de chaque côté, en saillie, des bossages cylindriques concentriques (12, 13) se logeant dans les creux des crochets (17), le diamètre du corps cylindrique (11) étant plus grand que celui des bossages (12, 13) et son épaisseur étant sensiblement égale à la distance entre les crochets (17).

4. Dispositif de verrouillage suivant l'une des revendications 1 à 3, caractérisé en ce que l'allongement de la distance entre l'oreille (20) de la porte (2) et la tête (10) est légèrement plus grande que la distance entre ladite (20) oreille et le bout (18) des crochets (17) quand l'écrou (9) est dévissé jusqu'à la butée (16).

## Patentansprüche

1. Schließvorrichtung für die Tür eines unter Druck stehenden Drehcontainers, einen Bolzen (8), eine Schraubmutter (9), Haken (17) und ein gelochtes Ansatzstück (20) enthaltend, dadurch gekennzeichnet, daß der Kopf (10) des Bolzens (8) in abnehmbarer Weise in die am Container (1) befindlichen Haken (17) einhakbar ist, wobei das andere Ende des Bolzenschaftes sich durch das an der Tür (2) befindliche Ansatzstück (20) hindurcherstreckt, die Mutter (9) auf der in Bezug auf den Kopf (10) anderen Seite des Ansatzstückes (20) auf den Schaft des Bolzens (8) geschraubt ist, das freie Ende des Bolzens (8) ein Widerlager (16) trägt, dessen größte Abmessung größer ist als der Durchmesser der besagten Schraube.

2. Schließvorrichtung nach Anspruch 1, dadurch gekennzeichnet, daß die Mutter (18) eine Einheit mit einem Spannring (14) bildet, dessen Ebene die Achse des Bolzens (8) enthält.

3. Schließvorrichtung nach Anspruch 1 oder 2, dadurch gekennzeichnet, daß der Kopf (10) des Bolzens (8) einen zylinderischen Körper (11) enthält, der mit einer Achse senkrecht zu der des Schaftes des besagten Bolzens auf jeder Seite vorspringende konzentrische zylinderische Vorsprünge (12, 13) trägt, die in den Mulden der Haken (17) Aufnahme finden, wobei der Durchmesser des zylinderischen Körpers (11) größer ist als der der Vorsprünge (12, 13), und seine Stärke im wesentlichen dem Abstand zwischen den Haken (17) entspricht.

4. Schließvorrichtung nach einem der Ansprüche 1 bis 3, dadurch gekennzeichnet, daß die Verlängerung des Abstandes zwischen dem Ansatzstück (20) an der Tür (2) und dem Kopf (10) etwas größer ist als der Abstand zwischen dem besagten Ansatzstück (20) und dem Ende (18) der Haken (17), wenn die Mutter (9) bis zum Widerlager (16) losgeschraubt ist.

## Claims

1. A locking device for the door of a rotary container under pressure, comprising a bolt (8), a screw (9), hooks (17) and a pierced lug (20), characterised in that the head (10) of the bolt (8) is capable of being hooked on in a detachable manner to the hooks 17 carried by the container (1), the other end of the stem of the bolt passing into the lug (20) carried by the door (2), the nut (9) being screwed onto the stem of the bolt (8) from the other side of the lug (20) in relation to the head (10), the free end of the bolt (8) carries an abutment (16) the largest dimension of which is greater than the diameter of the said screw.

2. A locking device according to claim 1, characterised in that the nut (18) is integral with a gripping ring (14) the plane of which contains the axis of the bolt (8).

3. A locking device according to claim 1 or 2, characterised in that the head (10) of the bolt (8) comprises a cylindrical body (11) with axis perpendicular to that of the stem of the said bolt and carrying, projecting on each side concentric cylindrical bosses (12, 13) lodging in the hollows of the hooks (17), the diameter of the cylindrical body (11) being greater than that of the bosses (12, 13) and its thickness being substantially equal to the distance between the hooks (17).

4. A locking device according to one of the claims 1 to 3, characterised in that the lengthening of the distance between the lug (20) of the door (2) and the head (10) is slightly greater than the distance between the said lug (20) and the end (18) of the hooks (17) when the nut (9) is unscrewed as far as the abutment (16).

FIG.1

EP 0 320 424 B1

FIG. 2

FIG.3

FIG. 4

## FIG. 5